# EUROPÄISCHE PATENTSCHRIFT

(11) **EP 1 313 258 B1**
(45) Veröffentlichungstag und Bekanntmachung des Hinweises auf die Patenterteilung: **02.09.2009**
(21) Anmeldenummer: 02102579.6
(22) Anmeldetag: 14.11.2002
(51) Int. Cl.: H04L 7/04, H04L 1/00

(54) **Empfangsschaltung und Verfahren zum Empfang von codierten Nachrichtensignalen**
Circuit and method for receiving coded signals
Circuit et procédé de réception de signaux codés

(30) Priorität: 16.11.2001 DE 10156110
(43) Veröffentlichungstag der Anmeldung: 21.05.2003
(73) Patentinhaber: NXP B.V., 5656 AG Eindhoven (NL)
(72) Erfinder: Budde, Wolfgang, Dr. c/o Philips Corporate, 52088, Aachen (DE); Fuhrmann, Peter c/o Philips Coporate, 52088, Aachen (DE)
(74) Vertreter: van der Veer, Johannis Leendert

(56) Entgegenhaltungen:
- EP-A- 0 249 931
- EP-A- 1 085 713
- WO-A-98/49801
- DE-A1- 3 122 763
- US-B1- 6 249 895

## Beschreibung

Die Erfindung bezieht sich auf eine Empfangsschaltung zum Empfang von Nachrichtensignalen.

Unter einem Nachrichtensignal wird ein Signal verstanden, welches eine codierte Information beinhaltet.

Nachrichtensignale, welche über Nachrichtenkanäle übertragen werden, unterliegen einer Fülle von Fehlereinflüssen. Dabei kann es insbesondere zu Amplitudenund Phasenfehlern kommen. Während Amplitudenfehler sich typischerweise als Einzeloder Mehrfach-Bitfehler auswirken, können Phasenfehler ganze Nachrichteninhalte zerstören, z. B. invertieren. Phasenfehler entstehen z. B. durch Ungenauigkeiten in der Bit-Synchronisierung zwischen Sender und Empfänger. Ein bekanntes Verfahren zur Vermeidung von Phasenfehlern ist die flankenweise Nachsynchronisation, d. h. mit dem Empfang eines jeden Bits oder einer jeden Nachrichtenflanke wird das Bit-Timing des Empfängers an den Datenstrom angepasst. Ein solches Verfahren, bei dem ausgehend von einer erkannten Flanke die Dauer einer Bitzeit angepasst wird, ist z.B. aus der CAN-Specification Version 1.2. Robert Bosch GmbH, 1990. bekannt. Dieses Verfahren kann jedoch bei stark verrauschten Eingangssignalen zu einem Ausrasten der Bit-Synchronisation und damit zum Verlust des Nachrichteninhalts führen.

DE 3122763 A1 zeigt eine Schaltungsanordnung zur Demodulation eines digitalen Signals. Ein analoges moduliertes Signal wird drei parallel geschalteten Demodulatoren zugeführt, die jeweils Datenblöcke ausgeben. Die Datenblöcke werden jeweils CRC-Schaltungen zugeführt, um eine Fehlerüberprüfung vorzunehmen. Basierend auf den Fehlerüberprüfungen werden Schaltelemente zur Durchleitung der einzelnen Ausgangssignale der Demodulatoren zu einem gemeinsamen Ausgang gesteuert.

WO 98/49801 beschreibt ein Verfahren zur Datenregeneration. Es werden gesicherte Daten übertragen. Empfangsseitig wird die Fehlerrate des Empfangssignals ermittelt. Die Abtastpunkte und die Entscheidungsschwelle werden in einem vorgegebenen Bereich variiert und aus den, während dieses Vorgangs ermittelten Übertragungsfehlern wird ein optimaler Abtastzeitpunkt und eine optimale Entscheidungsschwelle eingestellt. Die Empfangsschaltung weist einen ersten und zweiten Abtaster mit einem ersten und zweiten Dekoder auf, wobei jeder Dekoder ein Signal zu einer Steuereinheit ausgibt. Aufgrund der Fehlerkorrektur wirken sich zusätzliche Übertragungsfehler nicht aus.

Es ist Aufgabe der Erfindung, eine Empfangsschaltung sowie ein diesbezügliches Verfahren aufzuzeigen, welches eine verbesserte Dekodierung eines empfangenen Nachrichtensignals ermöglicht.

Diese Aufgabe wird durch die Merkmale der unabhängigen Ansprüche gelöst.

Erfindungsgemäß weist die Empfangsschaltung eine Parallelschaltung aus einem ersten Abtaster und einem zweitem Abtaster auf. Als Abtaster wird ein Element bezeichnet, welches das Nachrichtensignal zu vorgebbaren Zeitpunkten abtastet und in ein Abtastsignal mit digitalen Abtastwerten unwandelt. Der erste Abtaster albeitet nach einem ersten Abtastverfahren und der zweite Abtaster nach einem zweiten Abtastverfahren.

Der Erfindung liegt somit die Idee zugrunde, ein engehendes Nachrichtensignal parallel sowohl nach einem ersten Abstastverfahren als auch nach einem zweiten Abtastverfahren abzutasten. Durch diese parallele Abtastung stehen der Empfangschaltung ein erstes und ein zweites Abtastsignal zur Verfügung welche auf verchiedenste Art und Weise getrennt oder kombiniert von einer Auswerteeinheit ausgewertet werden können. Ist beispielsweise das erste Abtastverfahren für die gegenwärtigen Verhältnisse auf dem Nachrichtenkanal optimal, so kann die Auswerteeinheit das erste Abtastsignal auswählen und verarbeiten. Ändem sich später die Verhältnisse auf dem Nachrichtenkanal derart, dass eine Abtastung nach dem zweiten Abtastverfahren bessere Ergebnisse liefert, so kann die Auswerteeinheit das zweite Abtastsignalauswählen und weiterverarbeiten.

Es ist auch möglich, dass das erste und das zweite Abtastverfahren identischch sind und dass somit der erste und der zweite Abtaster nach dernselben Abtastverfahren arbeiten. Auch in diesem Fall ist aufgrund von Abtastungsgenauigkeiten die Wahtschelichkeit, ein undeutliches Nachritensignal doch noch mit einem der Abtaster korrekt abtasten zu können, erhöht.

Erfindungsgemäß sind den beiden Abtastern jeweils Dekodierer nachgeschaltet. Dadurch werden das erste und das zweite Abtastsignal parallel decodiert. Nachfolgend kann das Ausgangsignal des Dekodierers, welches keinen Fehler bzw. weniger Fehler aufweist, ausgewählt und weiter verarbeitet werden.

Weiter ist eine Steuereinheit vorgesehen, welche in Abhängigkeit der Fehersignale des ersten und /oder des zweiten Dekodierers das des ersten Dekodierers oder des zweiten Dekodierers auf eine Prüfeinheit schaltet. Die Prüfeinheit führt eine Überprüfung auf Nachrichtenebene durch, d.h. auf der Ebene des von dem Dekodierer 1 oder dem Dekodierer 2 rekonstruierten Bit-Stroms. Eine Möglichkeit hierzu ist z B. eine CRC (Cyclic Redundancy Check)-Prüfung. Der erste und der zweite Dekodierer sind dazu vorgesehen, eine Prüfung auf Codeebene durchzuführen, d h. eine Überprüfung hinsichtlich Code-Verletzungen aller Art. Die von der Prüfeinheit festgestellten Fehler werden vorzugsweise ebenfalls an die Steuereinheit geliefert und zur Steuerung des Schalters verwendet.

Bei der vorteilhaften Ausgestaltung der Erfindung gemäß Anspruch 3 erfolgt in dem ersten Abtaster eine Abtastung mit einem starren Abtastraster, d.h. das empfangene Nachrichtensignal wird in festen periodischen Abständen abgetastet und in ein digitales Abtastsignal umgewandelt. In dem zweiten Abtaster erfolgt eine Abtastung mit einer bitweisen Nachsynchronisation, d h. mit dem Empfang eines jeden Bits Bzw. einer jeden Nachrichtenflanke wird das Bit-Timing des Empfängers an den empfangenen Datenstrom angepasst. Das Verfahren der bitweisen Nachsynchronisation ist besonders geeignet zur Vermeidung von Phasenfehlern. Phasenfehler entstehen z B. durch Ungenauigkeiten in der Bit-Synchronisierung zwischen Sender und Empfänger. Phasenfehler können ganze Nachrichteninhalte zerstören, z. B. invertieren. Der Nachteil der bitweisen Nachsynchronisation ist jedoch, dass dieses Verfahren bei stark verauschten Eingangssignalen zu einem Ausrasten der Bit-Synchronisation und damit zum Verlust des Nachrichteninhaltes führen kann. Ist dies z. B. der Fall, so steht bei der erfindungsgemäßen Empfangsschaltung zusätzlich noch das Abtastsignal eines weiteren Abtasters, welcher beispielsweise mit einem starren Abtastraster arbeitet, zur Verfügung und das empfangene Nachrichtensignal kann trotzdem fehlerfrei decodiert und ausgewertet werden.

Die Abtaster können als AnalogDigital-Wandler oder als Schwellwertentscheider ausgeführt werden. Bei der Ausführung mittels Schwellwertentscheider ist vorzugsweise ein n-faches Oversampling vorgesehen. Liegt der Wert des empfangenen Nachrichtensignals zu einem Abtastzeitpunkt oberhalb eines vorgebbaren Schwellwertes, so liefert der Schwellwertentscheider als Abtastsignal eine 1, andernfalls eine 0.

Bei der Ausführung mittels eines Analog-Digital-Wandlers kann mehr Qualitätsanalyse durchgeführt werden. So ist es z B. bei flachen Signalflanken möglich, aus dem Verlauf des Signals die Flankenposition zu schätzen. Um Aliasing zu vermeiden, sollte dem Analog Digital-Wandler jedoch ein bandbegrenzender Filter vorgeschaltet sein.

Besondere Vorteile weist die Erfindung bei flankencodierten Signalen auf, z B. bei Signalen, die nach dem Xerxes-Code codiert sind. Bei flankencodierten Signalen ist die Information allein in dem Auftreten einer Signalflanke enthalten, -während die Amplitude eines flankencodierten Signals unerheblich ist.

Grundsätzlich ist diese Erfindung in allen Anwendungsbereichen der Kommunikations- und Speichertechnik anwendbar. Insbesondere sicherheitskritische Anwendungen in der Automobiltechnik, Industrieautomatisierung, Medizintechnik usw. profitieren von der redundanten Abtastung in Hinsicht auf den für die angestrebte Sicherheit zu leistenden Aufwand.

Die Aufgabe der Erfindung ist für das Verfahren gelöst durch ein Verfahren mit den Merkmalen des Anspruchs 10.

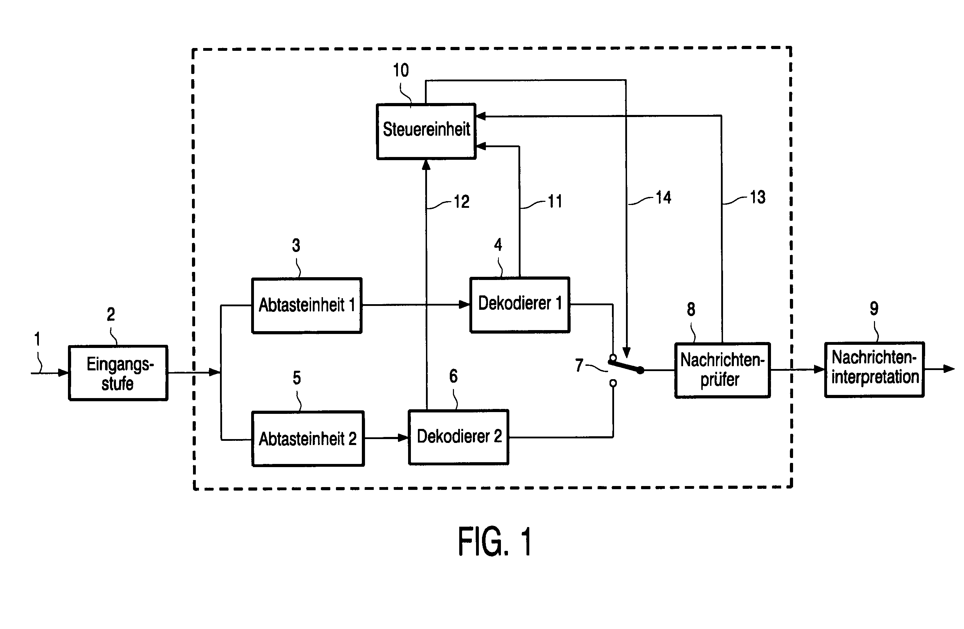

Einige Ausführungsbeipiele der Erfindung werden nachfolgend anhand der Zeichnung in Figur 1 näher erläutert. Es zeigen:
Figur1 - Ein Blokschaltbild einer Empfangsshaltung mit zwei Abtastern sowie zwei nachgeschalteten Dekodieren, gemäß der vorliegenden Erfindung;
Figur 2 - Ein Blockschaltbild einer Empfangsschaltung mit zwei Abtastern, einem Speicher zur Zwischenspeicherung des Abstastsignals eines Abtasters sowie einem Dekodierer,

Figur 1 zeigt eine Empfangsschaltung mit einer Eingangsstufe 2, der ein Nachrichtensignal 1 zugeführt wird Die Eingansstufe 2 kann z. B. einen HF und einen ZF-Mischer, Filter und andere Elemente enthalten. Die Eingangsstufe 2 dient der analogen Vorverarbeitung des eingehenden Nachrichtensignals 1. Der Eingangsstufe 2 ist nachgeschaltet eine Parallelschaltung, welche in einem ersten Zwei einem ersten Abtaster 3 mit einem nachgeschalteten ersten Dekodierer 4 sowie in einem zweiten Zweig einen zweiten Abtaster 5 mit einem nachgeschalteten zweiten Dekodierer 6 aufweist. Dieser Parallelschaltung nachgeschaltet ist ein Schalter 7, mittels dessen der erste oder zweite Zweig der Parallelschaltung mit einer Prüfeinheit 8 verbindbar ist. Der Prüfeinheit 8 nachgeschaltet ist eine Nachrichteninterpretattionseinheit 9.
Ferner ist eine Steuereinheit 10 vorgesehen. Der erste Dekodierer 4 liefert ein Fehlersignal 11 an die Steuereinheit 10, der zweite Dekodierer 6 ein Fehlersignal 12 und die Prüfeinheit 8 ein Fehlersignal 13. Die Steuereinheit 10 steuert den Schalter 7 und liefert ein Steuersignal 14 an den Schalter 7.

Der Abtaster 3 sowie der zweite Abtaster 5 können als Schwellwertscheider mit n-fachen Oversampling ausgeführt werden. Der Abtaster tastet dann das Nachrichtensignal zu vorgebbaren Zeitpunten ab. Liegt der Pegel des Nochrichtersignals zu diesen Abtastzeitpunkten oberhalb des Schwellwertes, so liefert der Abtaster eine 1, anderenfalls eine 0. Alternativ können der erste Abtaster 3 und der zweite Abtaster 5 als Analog-Digital-Wandler ausgeführt sein. Dies ermöglicht mehr Qualitätsanalyse. Allerdings sollte dem Analog-Digital-Wandler ein Bandpassfilter vorgeschaltet sein, um Aliasing zu vermeiden.

Der erste Dekodierer 4 decodiert das Abtastsignal des Abtasters 3, und der zweite Dekodierer 6 decodiert das Abtastsignal des Abtasters 5. Gleichzeitig führen der erste Dekodierer 4 und der zweite Dekodierer 6 auf Code-Ebene eine Überprüfung hinsichtlich Codeverletzungen aller Art durch. Treten derartige Code-Verletzungen auf, so werden entsprechende Fehlersignale 11 und 12 an die Steuereinheit 10 geliefert. Die Prüfeinheit 8 führt eine Prüfung auf Nachrichtenebene, d h auf Ebene des rekonstruierten Bit-Stromes durch. Dies kann z B. mittels einer CRC-Prüfung (Cydic Redundancy Check) erfolgen. Die Nachrichteninterpretationseinheit 9 führt dann eine weitere Nachrichten- bzw. Datenverarbeitung durch Die Prüfeinheit 8 liefert bei Erkennen von Fehlern auf Nachrichtenebene das Fehlersignal 13 an die Steuereinheit 10.

Bei der Empfangsschaltung gemäß Figur 1 wird somit das eingehende Nachrichtensignal parallel von dem ersten Abtaster 3 und dem ersten Dekodierer 4 sowie von dem zweiten Abtaster 5 und dem zweiten Dekodierer 6 verarbeitet. In dem ersten Abtaster 3 kann beispiels weise eine Abtastung mit einem starren Abtastraster erfolgen und in dem zweiten Abtaster 5 eine Abtastung mit einer bitweisen bzw. flankenweisen Nachsynchronisation. Die Steuereinheit 10 kann nun in Abhängigkeit der an sie gelieferten Fehlersignale 11,12 und 13 entscheiden, welches Abtastverfahren für das gegenwärtig empfangene Nachrichtensignal besonders geeignet ist. Dieses besonders geeignete Signal wird dann durch Ansteuerung des Schalters 7 ausgewählt und der Prüfeinheit 8 zugeführt.

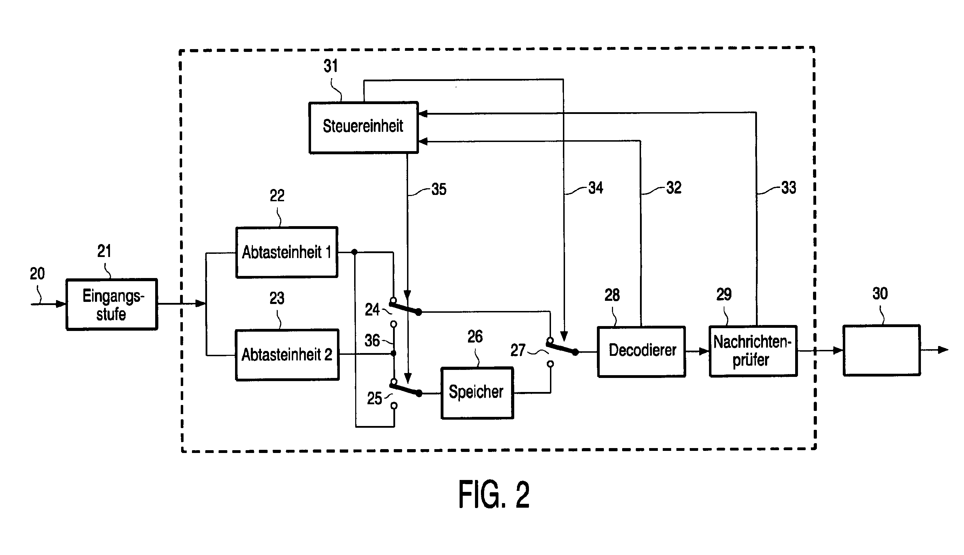

Figur 2 zeigt eine alternative Empfangsschaltung Diese alternative Empfangsschaltung weist eine Eingangsstufe 21 auf, der ein Nachrichtensignal 20 zugeführt wird. Die Eingangsstufe 21 entspricht der Eingangstufe 2 gemäß Figur 1. Der Eingangsstufe 21 nachgeschaltet ist eine Parallelschaltung aus einem ersten Abtaster 22 und einem zweiten Abtaster 23. Die Abtaster 22 und 23 entsprechen den Abtastern 3 und 5 gemäß Figur 1. Dem ersten Abtaster 22 und dem zweiten Abtaster 23 sind ein erster Schalter 24 und ein zweiter Schalter 25 nachgeschaltet. Über den ersten Schalter 24 lässt sich einerseits das Ausgangssignal des ersten Abtasters 22 einem dritten Schalter 27 zuführen. Mittels des ersten Schalters 24 lässt sich andererseits das Ausgangssignal des zweiten Abtasters 23 dem dritten Schalter 27 zuführen. Mittels des zweiten Schalters 25 lässt sich einerseits das Ausgangssignal des zweiten Abtasters 23 einem Speicher 26 zuführen und andererseits das Ausgangssignal des ersten Abtasters 22 dem Speicher 26 zuführen. Dem dritten Schalter 27 ist ein Dekodierer 28 nachgeschaltet. Mittels des dritten Schalters 27 kann einerseits der Eingang des Dekodierers 28 mit dem Schalter 24 gekoppelt werden und andererseits der Eingang des Dekodierers 28 mit dem Ausgang des Speichers 26. Der Dekodierer 28 entspricht den Dekodierem 4 und 6 gemäß Figur 1. Dem Dekodierer 28 ist eine Prüfeinheit 29 nachgeschaltet. Diese Prüfeinheit 29 entspricht der Prüfeinheit 8 gemäß Figur 1. Der Prüfeinheit 29 ist eine Nachrichteninterpretationseinheit 30 nachgeschaltet. Der Dekodierer 28 liefert ein Fehlersignal 32 an eine Steuereinheit 31. Die Prüfeinheit 29 liefert ein Fehlersignal 33 an die Steuereinheit 31. Die Steuereinheit 31 ist zur Ansteuerung des ersten Schalters 24, des zweiten Schalters 25 sowie des dritten Schalters 27 vorgesehen. Hierzu liefert sie ein Steuersignal 35 an den ersten Schalter 24, ein Steuersignal 36 an den zweiten Schalter 25 sowie ein Steuersignal 34 an den dritten Schalter 27. Im Gegensatz zu der in der Figur 1 dargestellten Empfangsschaltung werden bei der Empfangsschaltung gemäß Figur 2 die von den beiden Abtastern gelieferten Abtastsignale nicht parallel ausgewertet bzw decodiert, sondern es ist eine sequentielle Auswertung vorgesehen. Zunächst wird beispielsweise das Abtastsignal des ersten Abtasters 22 dem Dekodierer 28 zugeführt, während gleichzeitig das Abtastsignal des zweiten Abtasters 23 in dem Speicher 26 zwischengespeichert wird. Haben der Dekodierer 28 und/oder die Prüfeinheit 29 Fehler in dem vom ersten Abtaster 22 gelieferten Signal festgestellt, so liefern diese die Fehlersignale 32 und/oder 33 an die Steuereinheit 31, wodurch der dritte Schalter 27 umgeschaltet und dem Dekodierer 28 das in dem Speicher 26 zwischengespeicherte Signal des zweiten Abtasters 23 zugeführt wird. Der Dekodierer 28 und der Nachrichtenprüfer 29 können nun das Eingangssignal 20, welches gemäß dem in der zweiten Abtasteinheit 23 implementierten Abtastverfahren abgetastet wurde, auswerten und dekodieren.

## Patentansprüche

1. Empfangsschaltung zum Empfang von Nachrichtensignalen enthaltend:
einen ersten Abtaster (3) zur Umwandlung des Nachrichtensignals (1) in ein erstes Abtastsignal nach einem ersten Abtastverfahren,
wenigstens einen zweiten, dem ersten Abtaster (3) parallel geschalteten Abtaster (5) zur Umwandlung des Nachrichtensignals (1) in ein zweites Abtastsignal nach einem zweiten Abtastverfahren,
einen Schalter (7), eine Steuereinheit (10) und eine Prüfeinheit (8),
**gekennzeichnet durch**
einen Dekodierer (4), der dem ersten Abtaster (3) nachgeschaltet ist,
einen zweiter Dekodierer (6) der dem zweiten Abtaster (5) nachgeschaltet ist, wobei der erste Dekodierer (4) und der zweite Dekodierer (6) jeweils ein Fehlersignal (11, 12) auf Code-Ebene basierend auf einer Überprüfung auf Codeverletzungen zur Steuereinheit (10) ausgeben, wobei dem Schalter (7) jeweils das dekodierte Ausgangssignal des ersten Dekodierer (4) und des zweiten Dekodierers (6) zugeführt wird, und
der Steuereinheit (10) die Fehlersignale (11, 12) des ersten und zweiten Dekodierers (4, 6) zugeführt werden, und die Prüfeinheit (8) zur Prüfung eines zugeführten Signals vom Ausgang des Schalters (7) auf Basis eines rekonstruierten Bitstroms vorgesehen ist, wobei die Prüfeinheit (8) bei Auftreten eines Fehlers auf der Nachrichten-Ebene ein Fehlersignal (13) an die Steuereinheit (10) ausgibt, und die Steuereinheit (10) in Abhängigkeit der zugeführten Fehlersignale (11, 12, 13) von den ersten und zweiten Dekodierem (4, 6) und von der Prüfeinheit (8) den Schalter (7) steuert, um der Prüfeinheit (8) das Ausgangssignal des ersten Dekodierers (4) oder des zweiten Dekodierers (6) zur weiteren Nachrichtenverarbeitung zuzuführen.

2. Empfangsschaltung nach Anspruch 1,**dadurch gekennzeichnet, dass** ein Speicher (26) vorgesehen ist, mittels dessen wahlweise das Abtastsignal des ersten oder des zweiten Abtasters (22, 23) zwischenspeicherbar ist, wobei die Prüfeinheit (29) dazu vorgesehen ist, in einem ersten Schritt das Abtastsignal des einen Abtasters (22, 23) auszuwerten und bei Erkennen eines oder mehrerer Fehler in einem zweiten Schritt das im Speicher (26) zwischengespeicherte Abtastsignal des anderen Abtasters (22, 23) auszuwerten.

3. Empfangsschaltung nach Anspruch 1, **dadurch gekennzeichnet, dass** in dem ersten Abtaster (3) als erstes Abtastverfahren eine Abtastung mit einem starren Abtastraster und in dem zweiten Abtaster (5) als zweites Abtastverfahren eine Abtastung mit einer bitweisen Nachsynchronisation vorgesehen ist.

4. Empfangsschaltung nach Anspruch 1, wobei das codierte Nachrichtensignal ein flankencodiertes Signal ist.

5. Empfangsschaltung nach Anspruch 1, wobei der Abtaster (3, 5) als Analog-Digital-Wandler ausgeführt ist.

6. Empfangsschaltung nach Anspruch 1, wobei der Abtaster (3, 5) ein Schwellwertentscheider ist.

7. Verfahren zum Empfang von codierten Nachrichtensignalen, umfassend die Schritte:
- Umwandeln des Nachrichtensignals mittels eines ersten Abtastverfahrens in ein erstes Abtastsignal,
- Umwandeln des Nachrichtensignals mittels eines zweiten Abtastverfahrens in ein zweites Abtastsignal, parallel zum ersten Abtastverfahren,
- Dekodieren des ersten Abtastsignals
- Dekodieren des zweiten Abtastsignals, parallel zum ersten Dekodieren
**gekennzeichnet durch**
- paralleles Überprüfen der dekodierten Signale auf Code-Ebene hinsichtlich Codeverletzungen, und
- Erzeugen von Fehlersignalen (11, 12) basierend auf der Überprüfung auf Codeverletzungen Erzeugen von Fehlersignalen (11, 12)
- Steuern, ob das erste dekodierte Abstastsignal oder das zweite dekodierte Abtastsignal weiterverarbeitet wird, basierend auf einer Auswertung der Fehlersignale (11, 12) und
- Überprüfen des ausgewählten ersten oder zweiten dekodierten Abstastsignals auf Fehler auf der Nachrichten-Ebene auf Basis eines rekonstruierten Bilstroms und
- Erzeugen eines Fehlersignals (13), wenn im ausgewählten ersten oder zweiten dekodierten Abstastsignal auf der Nachrichten-Ebene ein Fehler vorliegt, wobei die Steuerung, welches der beiden dekodierten Abstastsignale weiterverarbeitet wird, auch auf dem Fehlersignal basiert, dass bei der Überprüfung auf Nachrichten-Ebene erzeugt wird.

## Claims

1. A receiving circuit for receiving message signals, comprising:
a first sampler (3) for converting the message signal (1) into a first sampled signal by a first sampling method,
at least a second sampler (5) connected in parallel to the first sampler (3) for converting the message signal (1) into a second sampled signal by a second sampling method,
a switch (7), a control unit (10) and a checking unit (8),
**characterized by**
a decoder (4) which is connected downstream of the first sampler (3),
a second decoder (6) which is connected downstream of the second sampler (5), the first decoder (4) and the second decoder (6) each supplying to the control unit (10) an error signal (11, 12) at code level based on a check of code injuries, while the switch (7) is supplied each time with the decoded output signal of the first decoder (4) and of the second decoder (6), and
the control unit (10) is supplied with the error signals (11, 12) from the first and second decoders (4, 6), and the checking unit (8) is provided for checking a supplied signal coming from the output of the switch (7) based on a reconstructed bitstream, the checking unit (8), at the occurrence of an error at message level, supplying an error signal (13) to the control unit (10), and the control unit (10) controlling the switch (7) in dependence on the supplied error signals (11, 12, 13) coming from the first and second decoders (4, 6) and from the checking unit (8) in order to supply to the checking unit (8) the output signal of the first decoder (4) or the second decoder (6) for further message processing.

2. A receiving circuit as claimed in claim 1, **characterized in that** a memory (26) is provided by means of which the sampled signal from either the first or the second sampler (22, 23) can be buffered, while the analyzing unit (29) is designed for analyzing the sampled signal from one sampler (22, 23) in a first step and, if one or more errors are detected, for analyzing the sampled signal from the other sampler (22, 23), which was buffered in the memory (26), in a second step.

3. A receiving circuit as claimed in claim 1, **characterized in that** in the first sampler (3) provision is made for sampling in a fixed sampling pattern as a first sampling method, and in the second sampler (5) provision is made for sampling with bitwise resynchronization as a second sampling method.

4. A receiving circuit as claimed in claim 1, where the coded message signal is an edge-coded signal.

5. A receiving circuit as claimed in claim 1, where the sampler (3, 5) is designed as an analog-to-digital converter.

6. A receiving circuit as claimed in claim 1, where the sampler (3, 5) is a threshold discriminator.

7. A method of receiving coded message signals, comprising the following steps:
- conversion of the message signal into a first sampled signal by means of a first sampling method,
- conversion of the message signal into a second sampled signal by means of a second sampling method in parallel with the first sampling method,
- decoding of the first sampled signal
- decoding of the second sampled signal in parallel with the first decoding,
**characterized by**
- checking in parallel of the decoded signals at code level as regards code injuries, and
- generating of error signals (11, 12) based on the checking for code injuries,
- controlling whether the decoded first sampled signal or the second decoded sampled signal is further processed, based on an analysis of the error signals (11, 12) and
- checking of the selected first or second decoded sampled signal for errors at message level based on a reconstructed bitstream and
- generating an error signal (13) if in the selected first or second decoded sampled signal an error occurs at message level, while the control of which of the two decoded sampled signals is further processed is also based on the error signal that is generated at the checking at message level.

## Revendications

1. Circuit de réception destiné à recevoir des signaux de communication comprenant : un premier analyseur (3) destiné à convertir le signal de communication (1) en un premier signal d'analyse après un premier procédé d'analyse, au moins un second analyseur (5), connecté en parallèle au premier analyseur (3), destiné à convertir le signal de communication (1) en un second signal d'analyse après un second procédé d'analyse,
un commutateur (7), une unité de commande (10) et une unité de contrôle (8),
**caractérisé par**
un décodeur (4), relié en aval au premier analyseur (3),
un second décodeur (6), relié en aval au second analyseur (5), le premier décodeur (4) et le second décodeur (6) émettant respectivement un signal d'erreur (11, 12) au niveau d'un code basé sur un contrôle des violations de code vers l'unité de commande (10), le signal de sortie décodé du premier décodeur (4) et du second décodeur (6) étant acheminé vers le commutateur (7) et
les signaux d'erreur (11, 12) du premier et du second décodeur (4, 6) sont acheminés vers l'unité de commande (10), et l'unité de contrôle (8) est prévue pour contrôler un signal acheminé depuis la sortie du commutateur (7) sur la base d'un flux de bits reconstruit, l'unité de contrôle (8) émettant un signal d'erreur (13) au niveau de l'unité de commande (10) lors de la survenue d'une erreur au niveau des messages, et l'unité de commande (10) commande le commutateur (7) en fonction des signaux d'erreur acheminés (11, 12, 13) par le premier et le second décodeur (4, 6) et par l'unité de contrôle (8) afin d'acheminer vers l'unité de contrôle (8) le signal de sortie du premier décodeur (4) ou du second décodeur (6) pour un traitement ultérieur des messages.

2. Circuit de réception selon la revendication 1, **caractérisé en ce qu'**une mémoire (26) est prévue, au moyen de laquelle le signal d'analyse du premier ou du second décodeur (22, 23) peut éventuellement être enregistré temporairement, l'unité de contrôle (29) étant prévue pour analyser, dans une première étape, le signal d'analyse de l'un des analyseurs (22, 23) et, en cas d'identification d'une ou plusieurs erreurs, d'analyser, dans une seconde étape, le signal d'analyse de l'autre analyseur (22, 23) enregistré temporairement dans la mémoire (26).

3. Circuit de réception selon la revendication 1, **caractérisé en ce qu'**une analyse est prévue avec une grille d'analyse fixe dans un premier analyseur (3) comme premier procédé d'analyse et **en ce qu'**une analyse avec une synchronisation ultérieure par bits est prévue dans le second analyseur (5) comme second procédé d'analyse.

4. Circuit de réception selon la revendication 1, **caractérisé en ce que** le signal de communication codé est un signal codé de flanc.

5. Circuit de réception selon la revendication 1, **caractérisé en ce que** l'analyseur (3, 5) est conçu comme convertisseur analogique-numérique.

6. Circuit de réception selon la revendication 1, **caractérisé en ce que** l'analyseur (3, 5) est un dispositif de détermination de la valeur seuil.

7. Procédé de réception de signaux de communication codés, comprenant les étapes consistant à :
- convertir le signal de communication au moyen d'un premier procédé d'analyse en un premier signal d'analyse,
- convertir le signal de communication au moyen d'un second procédé d'analyse en un second signal d'analyse, parallèlement au premier procédé d'analyse,
- décoder le premier signal d'analyse,
- décoder le second signal d'analyse, parallèlement au décodage du premier signal d'analyse,
**caractérisé par** les étapes consistant à :
- contrôler en parallèle les signaux décodés au niveau du code par rapport aux violations de code et
- générer des signaux d'erreur (11, 12) en fonction du contrôle des violations de code,
- commander le traitement ultérieur du premier signal d'analyse décodé ou du second signal d'analyse décodé en fonction d'une analyse des signaux d'erreur (11, 12) et
- contrôler le premier ou le second signal d'analyse décodé choisi au niveau des messages en fonction d'un flux de bits reconstruit, et
- générer un signal d'erreur (13) lorsqu'une erreur survient dans le premier ou le second signal d'analyse décodé choisi au niveau des messages, la commande indiquant lequel des deux signaux d'analyse décodés est traité ultérieurement reposant également sur le signal d'erreur généré lors du contrôle au niveau des messages.
